# EUROPEAN PATENT SPECIFICATION

(11) **EP 3 413 272 B1**
(45) Date of publication and mention of the grant of the patent: **01.07.2026**
(21) Application number: 18179326.6
(22) Date of filing: 02.09.2010
(51) Int. Cl.: G07C 5/00

(54) **PLATFORM HEALTH MONITORING APPARATUS AND METHOD**
PLATTFORMGESUNDHEITSÜBERWACHUNGSVORRICHTUNG UND -VERFAHREN
APPAREIL ET PROCÉDÉ DE SURVEILLANCE DE LA SANTÉ D'UNE PLATE-FORME

(30) Priority: 12.10.2009 US 57754909
(43) Date of publication of application: 12.12.2018
(62) Divisional of application: 10752510.7
(73) Proprietor: The Boeing Company, Arlington, VA 22202 (US)
(72) Inventor: SAFA-BAKHSH, Robab, Ambler, PA Pennsylvania 19002 (US); HARRIS, Patrick, Bonney Lake, WA Washington 98391 (US)
(74) Representative: Morrall, Jonathan Ian McLachlan

(56) References cited:
- EP-A1- 1 455 313
- EP-A2- 2 063 399
- WO-A1-02/18879
- WO-A1-2009/122249
- US-A- 5 041 976
- US-A1- 2008 177 683

## Description

### BACKGROUND INFORMATION

### 1. Field:

The present disclosure relates generally to platforms and, in particular, to a method and apparatus for monitoring platforms. Still more particularly, the present disclosure relates to a method and apparatus for monitoring the health and function of platform systems and subsystems.

### 2. Background:

A platform may take the form of, for example, without limitation, a mobile platform, a stationary platform, a land-based structure, an aquatic-based structure, a space-based structure, an aircraft, a submarine, a bus, a personnel carrier, a tank, a train, an automobile, a spacecraft, a space station, a satellite, a surface ship, and/or some other suitable platform. The reliability of a platform is important to the operation and use of the platform.

For example, with aircraft, it is desirable to know when different components of the aircraft may need maintenance. The maintenance may be performed using maintenance schedules. These maintenance schedules typically are generated using histories for the different components. With the scheduled maintenance, unscheduled interruptions in the use of the aircraft may be avoided. Even with the scheduled maintenance, components may require replacement or maintenance at times other than those indicated by schedules. As a result, an aircraft may be out of service at unplanned times. This situation may require having additional aircraft or delays in transporting passengers or cargo.

Additionally, health monitoring systems are used to monitor various systems of a platform. Current health monitoring systems monitor components for indications that the component is not operating at a desired level of performance. The monitoring of a platform is performed by gathering information from these different components or sensors associated with the components. Currently available health monitoring systems receive and process large amounts of data from sensors for use in assessing the health of different systems and components in a platform.

Currently available health monitoring systems use specific types of data or data from specific sensors or sources to assess the health of a platform. For example, the health of a particular system may be derived from data collected from a particular set of sensors. Other available data related to the health of the platform is not used in identifying the health of that system.

Currently available systems, however, may not provide an identification of the health of a vehicle with a desired amount of accuracy. When the accuracy does not meet desired levels, increased maintenance may occur. This increased maintenance may be due to missed or late identification of maintenance problems. Further, false identification of maintenance problems also may lead to increased maintenance. For example, if maintenance needed for a transmission system of a vehicle is not identified with the desired amount of accuracy, maintenance may not be performed as soon as needed.

As a result, additional parts, expense, and time may be needed to obtain the desired performance from the transmission system. Timely maintenance of the transmission system, for example, may require fewer parts or no parts and merely a replacement of lubrication fluids.

Therefore, it would be advantageous to have a method and apparatus that addresses one or more of the issues discussed above, as well as possibly other issues.

EP 2 063 399 A2 describes a health monitoring system for a vehicle system which includes an operational support system including a plurality of managers and a decision support module. Each manager corresponds to a different sub-system of the vehicle system, and comprises a plurality of reasoners and a fusion block. Each reasoner is configured to obtain data and provide preliminary output regarding a different component of the sub-system based on the data.

US 2008/177683 Al describes a computer implemented method, apparatus, and computer usable program code for processing sensor data. A network data processing system contains a server, and a plurality of mobile clients. Each mobile client executes on a node using an artificial intelligence process and a memory model located at the node. Each mobile client also receives data from a set of sensors associated with the node to form sensor data, processes the sensor data using the artificial intelligence process and the memory model, and identifies an action based on processing the sensor data.

EP 1 455 313 Al describes a health management system and method for a complex system having at least one information source with data sources, an Aircraft Condition Analysis and Management system (ACAMS) for monitoring the data sources, an information controller for collecting and processing the data sources and a diagnostic/prognostic reasoner for fusing the collected data sources to establish current and future states and conditions of the complex system.

WO 02/18879 Al describes a method and computer-based apparatus for monitoring the degradation of, predicting the remaining service life of, and/or planning maintenance for, an operating system are disclosed. Diagnostic information on degradation of the operating system is obtained through measurement of one or more performance characteristics by one or more sensors onboard and/or proximate the operating system.

WO 2009/122249 Al describes a failure diagnostic information generating apparatus that includes a repair information acquiring unit that acquires repair information indicating the content of repair or replacement conducted for a vehicle malfunction or a cause of the malfunction; an malfunction-time vehicle information acquiring unit that acquires malfunction-time vehicle information indicating a vehicle state detected when the malfunction occurs; an instruction information generating unit that generates instruction information, usable for future repair or replacement, on the basis of the repair information and the malfunction-time vehicle information; and a recurrence information acquiring unit that acquires recurrence information indicating whether the malfunction has recurred after the repair or replacement.

US 5 041 976 A describes a system for diagnosing faults in electronic control systems wherein a large volume of information is exchanged between the electronic control processor and a mechanical system under its control. The data is acquired such that parameter vectors describing the system operation are formed. The vectors are provided to a pattern recognition system such as a neural network for classification according to the operating condition of the electronically controlled system.

### SUMMARY

The issues discussed above are solved by an apparatus according to claim 1 and a method according to claim 10.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:
**Figure 1** is an illustration of a platform manufacturing and service method in accordance with an advantageous embodiment;
**Figure 2** is an illustration of an aircraft in which an advantageous embodiment may be implemented;
**Figure 3** is an illustration of a health monitoring environment in accordance with an advantageous embodiment;
**Figure 4** is an illustration of a data processing system in accordance with an advantageous embodiment;
**Figure 5** is an illustration of a flow of information in a computer system for a health monitoring system in accordance with an advantageous embodiment;
**Figure 6** is an illustration of a plurality of observations in accordance with an advantageous embodiment;
**Figure 7** is an illustration of a flowchart of a process for monitoring a platform in accordance with an advantageous embodiment;
**Figure 8** is an illustration of a flowchart for creating a profile in accordance with an illustrative embodiment;
**Figure 9** is an illustration of a flowchart for creating scores for observations in accordance with an advantageous embodiment; and
**Figure 10** is an illustration of a flowchart of a process for creating known profiles in accordance with an advantageous embodiment.

### DETAILED DESCRIPTION

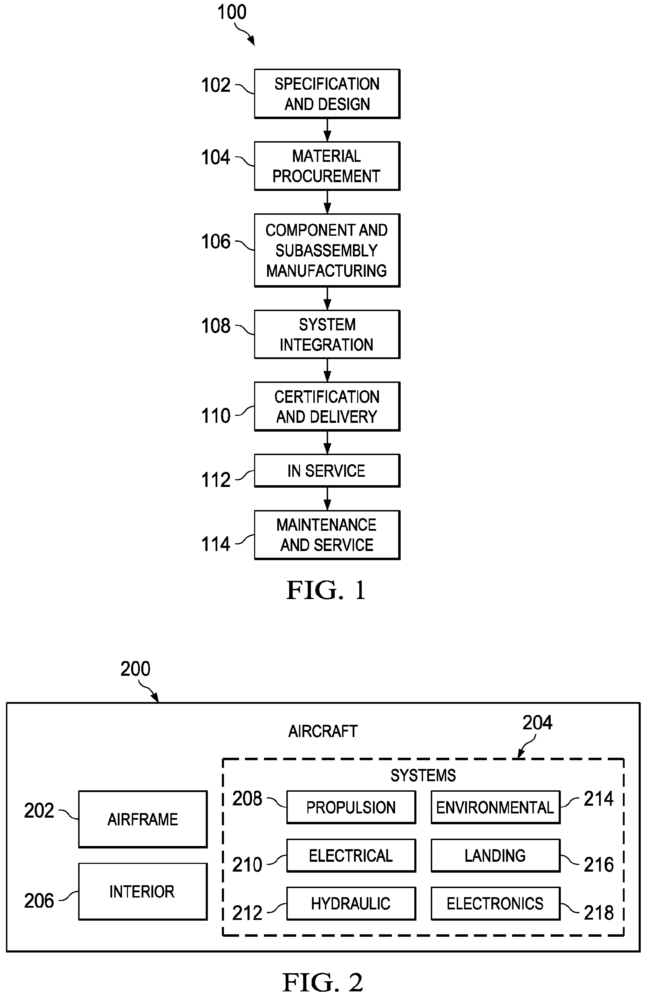

Referring more particularly to the drawings, embodiments of the disclosure may be described in the context of aircraft manufacturing and service method **100** as shown in **Figure 1** and aircraft **200** as shown in **Figure 2****.** Turning first to **Figure 1****,** an illustration of an aircraft manufacturing and service method is depicted in accordance with an advantageous embodiment. During pre-production, aircraft manufacturing and service method **100** may include specification and design **102** of aircraft **200** in **Figure 2** and material procurement **104.**

During production, component and subassembly manufacturing **106** and system integration **108** of aircraft **200** in **Figure 2** takes place. Thereafter, aircraft **200** in **Figure 2** may go through certification and delivery **110** in order to be placed in service **112.** While in service **112** by a customer, aircraft **200** in **Figure 2** is scheduled for routine maintenance and service **114,** which may include modification, reconfiguration, refurbishment, and other maintenance or service.

Each of the processes of aircraft manufacturing and service method **100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of venders, subcontractors, and suppliers; and an operator may be an airline, leasing company, military entity, service organization, and so on.

With reference now to **Figure 2****,** an illustration of an aircraft is depicted in which an advantageous embodiment may be implemented. In this example, aircraft **200** is produced by aircraft manufacturing and service method **100** in **Figure 1** and may include airframe **202** with a plurality of systems **204** and interior **206.** Examples of systems **204** include one or more of propulsion system **208,** electrical system **210,** hydraulic system **212,** environmental system **214,** landing system **216,** and electronics system **218.** Any number of other systems may be included. Although an aerospace example is shown, different advantageous embodiments may be applied to other industries, such as the automotive industry.

Apparatus and methods embodied herein may be employed during at least one of the stages of aircraft manufacturing and service method **100** in **Figure 1****.** As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C or item B and item C.

In one illustrative example, components or subassemblies produced in component and subassembly manufacturing **106** in **Figure 1** may be fabricated or manufactured in a manner similar to components or subassemblies produced while aircraft 200 is in service **112** in **Figure 1****.** As yet another example, a number of apparatus embodiments, method embodiments, or a combination thereof may be utilized during production stages, such as component and subassembly manufacturing **106** and system integration **108** in **Figure 1****.**

A number, when referring to items, means one or more items. For example, a number of apparatus embodiments is one or more apparatus embodiments. A number of apparatus embodiments, method embodiments, or a combination thereof may be utilized while aircraft **200** is in service **112** and/or during maintenance and service **114** in **Figure 1****.** The use of a number of the different advantageous embodiments may substantially expedite the assembly of and/or reduce the cost of aircraft **200.**

In these illustrative examples, a health monitoring system may be implemented in aircraft **200** during system integration **108** or maintenance and service **114.** A health monitoring system, in accordance with an advantageous embodiment, may be used while in service **112** and/or during maintenance and service **114.**

The different advantageous embodiments recognize and take into account a number of considerations. For example, the different advantageous embodiments recognize and take into account that in currently used health monitoring systems, the sensor data used to identify the condition of a component is often assigned by the designers of the health monitoring system.

The different advantageous embodiments recognize and take into account that this type of use of sensor data may not take into account other data that may affect a particular component. For example, changes or vibrations in a first system connected to a second system also may affect that second system. The different advantageous embodiments recognize and take into account that currently available health monitoring systems do not take into account all of the different systems or structures in the vehicle that may affect the system being monitored.

The different advantageous embodiments recognize and take into account that various types of analysis may be used to take into account additional data. For example, statistical analysis, data monitoring, signal processing, rule-based systems, fuzzy logic, genetic algorithms, Monte Carlo simulations, and/or other types of processes may be used. These different potential solutions, however, do not provide the desired results. With data monitoring, these types of processes are time consuming and costly in terms of processor resources.

These different processes also may not provide the desired level of accuracy with respect to identifying the state of different systems within a platform. For example, with statistical analysis, assumptions are based on large numbers of samples that are often not available. Further, statistical analysis reduces the amount of information collected to a smaller set of parameters. With complex systems, the assumptions made for this type of analysis and the processing techniques used may not model the system with the amount of desired accuracy.

As another example, with signal processing, data is relied on from a number of sensors for a particular component. These values are compared with a threshold to make identifications. This type of technique does not take into account other types of conditions that may occur in the vehicle. With rule-based systems, the different interactions between components in a vehicle may be difficult to identify and take into account.

Genetic algorithms may require more time than desired to obtain a proper configuration to identify the health of a vehicle. Monte Carlo simulations involve assumptions from random generators and statistics that may not be indicative of real world conditions.

The different advantageous embodiments recognize and take into account that a solution that takes into account sufficient data to more accurately identify the state of the vehicle is desirable. Thus, the different advantageous embodiments provide a method and apparatus for managing the health of a platform. In one advantageous embodiment, an apparatus comprises a computer system and a sensor network. The sensor network is associated with a platform. The computer system is connected to the sensor network and is configured to receive information from the sensor network. The computer system is configured to form observations from the information for a current profile. The computer system compares the current profile with a number of known profiles to identify a health state of the platform.

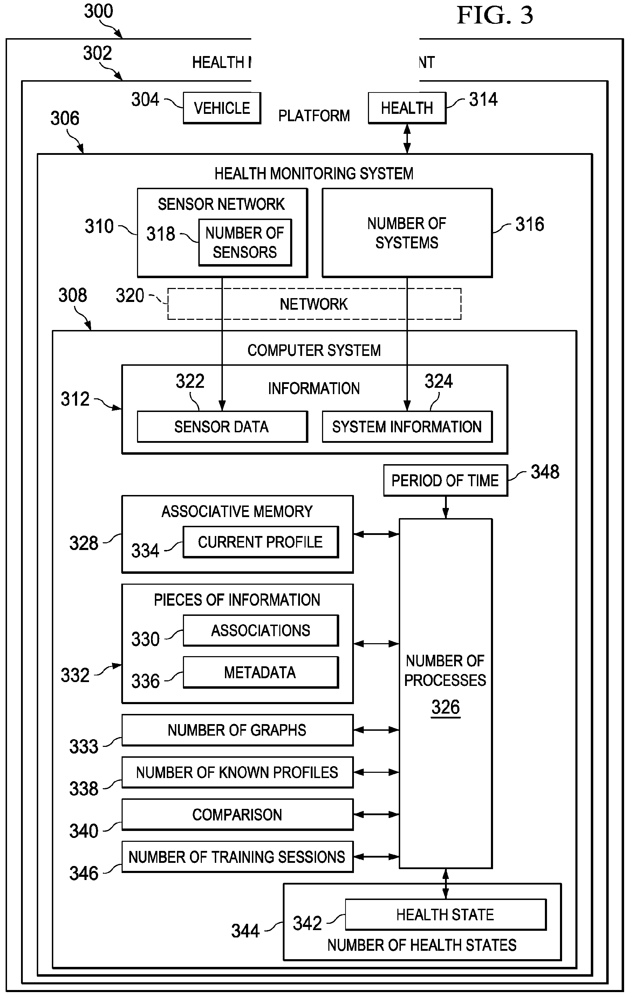

With reference now to **Figure 3****,** an illustration of a health monitoring environment is depicted in accordance with an advantageous embodiment. Health monitoring environment **300** may be implemented using platform **302.** As illustrated, platform **302** takes the form of vehicle **304.** Vehicle **304** may be implemented using aircraft **200** in **Figure 2****.**

As illustrated, health monitoring system **306** is associated with platform **302.** A first component may considered to be associated with a second component by being secured to the second component, bonded to the second component, fastened to the second component, and/or connected to the second component in some other suitable manner. The first component also may be connected to the second component through using a third component. The first component also may be considered to be associated with the second component by being formed as part of and/or as an extension of the second component.

In these examples, health monitoring system **306** is comprised of computer system **308** and sensor network **310.** Computer system **308** may include one or more computers that may be in communication with each other. Computer system **308** is configured to perform a number of operations in these illustrative examples. Computer system **308** receives at least a portion of information **312** from sensor network **310** to monitor health **314** of platform **302.** Information **312** also may be received from number of systems **316** associated with platform **302.**

In these illustrative examples, sensor network **310** comprises number of sensors **318** connected to network **320.** Network **320,** in turn, is connected to computer system **308** in these examples. Number of sensors **318** generates sensor data **322** in information **312.** A sensor within number of sensors **318** is a device that measures a physical quantity and converts that measurement into a signal. This signal may be an analog signal or a digital signal, depending on the particular implementation. This signal forms a part of sensor data **322.**

Number of sensors **318** may comprise a number of different types of sensors. For example, without limitation, number of sensors **318** may comprise at least one of a microphone, an accelerometer, a carbon dioxide sensor, a catalytic bead sensor, an oxygen sensor, a current sensor, a volt meter, an airflow sensor, a mask flow sensor, a hygrometer, a particle detector, an altimeter, a gyroscope, a yaw rate sensor, and/or some other suitable type of device.

In some illustrative examples, "at least one of" may be, for example, without limitation, two of item A, one of item B, and ten of item C; four of item B and seven of item C; and/or other suitable combinations.

Number of systems **316** may include, for example, without limitation, computers, avionics, a propulsion system, an environmental system, a hydraulic system, a maintenance system, and/or other suitable types of systems. Number of systems **316** generates system information **324,** which may be used by health monitoring system **306.** In these illustrative examples, system information **324** may include data, commands, logs, messages, and/or other suitable types of information that may be generated by number of sensors **318** and number of systems **316.**

In this illustrative example, computer system **308** runs number of processes **326** to process information **312** for placement into associative memory **328.** Computer system **308** analyzes associative memory **328** to form current profile **334.** For example, number of processes **326** may form associations **330** between pieces of information **332** to form number of graphs **333** and/or current profile **334.** In these illustrative examples, current profile **334** is for health **314** of platform **302.** Current profile **334** may change as information **312** received by computer system **308** changes.

In this depicted example, current profile **334** is in associative memory **328.** Associative memory **328** may take the form of a data construct, a data structure, and/or some other type of memory in this example. Further, associative memory **328** may not be physical memory in this example.

In processing information **312,** number of processes **326** may associate or add metadata **336** to pieces of information **332.** Metadata **336** may be used to create associations **330** between pieces of information **332.** In these illustrative examples, metadata **336** may be comprised of at least one of timestamps for pieces of information **332** and identifiers of sources of pieces of information **332.**

Current profile **334** may then be compared to number of known profiles **338** to form comparison **340.** Comparison **340** is used to identify health state **342** for platform **302.** Health state **342** identifies health **314** for platform **302.** Health state **342** may be selected from number of health states **344** for number of known profiles **338.** In these illustrative examples, number of health states **344** may include, for example, without limitation, new, operational, healthy, degraded, needs repair, repaired, and/or other suitable states.

In these illustrative examples, number of known profiles **338** may be created through number of training sessions **346** using platform **302.** For example, in one training session in number of training sessions **346,** all of information **312** received by health monitoring system **306** over period of time **348** may be identified as being for a particular health state within number of health states **344.** For example, health state **342** may be "new" for period of time **348.** Other profiles for number of known profiles **338** may be generated for other periods of time during number of training sessions **346.**

The amount of information **312** collected may vary, depending on the particular implementation. For example, information **312** may be collected in a continuous manner, a uniform manner, a discontinuous manner, or a non-uniform manner. The information may be collected for a number of minutes, hours, days, or some other suitable period of time. Number of training sessions **346** may be performed for different known states of platform **302.** Number of training sessions **346** may be performed specifically for platform **302** such that number of known profiles **338** accurately reflects different health states for platform **302.**

In this manner, health monitoring system **306** may increase the availability of platform **302** as compared to currently used health monitoring systems. Comparison **340** of current profile **334** to number of known profiles **338** may be performed each time a piece of information is received by health monitoring system **306.**

As yet another example, although platform **302** takes the form of vehicle **304** in these examples, platform **302** may take other forms. For example, platform 302 may be only a portion of vehicle **304.** For example, platform **302** may be a propulsion system, a shaft, or some other part of vehicle **304.**

The illustration of health monitoring environment **300** in **Figure 3** is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, in some advantageous embodiments, health monitoring system **306** may only receive information **312** from sensor network **310** and may not receive information **312** from number of systems **316.** In yet other advantageous embodiments, multiple health monitoring systems may be present to monitor different portions of platform **302.**

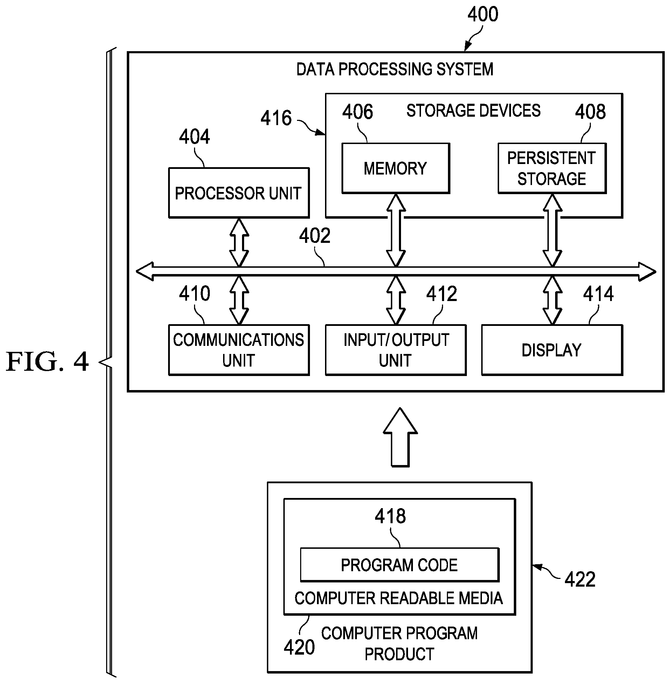

Turning now to **Figure 4****,** an illustration of a data processing system is depicted in accordance with an advantageous embodiment. In this illustrative example, data processing system **400** includes communications fabric **402,** which provides communications between processor unit **404,** memory **406,** persistent storage **408,** communications unit **410,** input/output (I/O) unit **412,** and display **414.**

Processor unit **404** serves to execute instructions for software that may be loaded into memory **406.** Processor unit **404** may be a set of one or more processors or may be a multi-processor core, depending on the particular implementation. Further, processor unit **404** may be implemented using one or more heterogeneous processor systems in which a main processor is present with secondary processors on a single chip. As another illustrative example, processor unit **404** may be a symmetric multi-processor system containing multiple processors of the same type.

Memory **406** and persistent storage **408** are examples of storage devices **416.** A storage device is any piece of hardware that is capable of storing information such as, for example, without limitation, data, program code in functional form, and/or other suitable information either on a temporary basis and/or a permanent basis. Memory **406,** in these examples, may be, for example, a random access memory or any other suitable volatile or non-volatile storage device.

Persistent storage **408** may take various forms, depending on the particular implementation. For example, persistent storage **408** may contain one or more components or devices. For example, persistent storage **408** may be a hard drive, a flash memory, a rewritable optical disk, a rewritable magnetic tape, or some combination of the above. The media used by persistent storage **408** also may be removable. For example, a removable hard drive may be used for persistent storage **408.**

Communications unit **410,** in these examples, provides for communications with other data processing systems or devices. In these examples, communications unit **410** is a network interface card. Communications unit **410** may provide communications through the use of either or both physical and wireless communications links.

Input/output unit **412** allows for input and output of data with other devices that may be connected to data processing system **400.** For example, input/output unit **412** may provide a connection for user input through a keyboard, a mouse, and/or some other suitable input device. Further, input/output unit **412** may send output to a printer. Display **414** provides a mechanism to display information to a user.

Instructions for the operating system, applications, and/or programs may be located in storage devices **416,** which are in communication with processor unit **404** through communications fabric **402.** In these illustrative examples, the instructions are in a functional form on persistent storage **408.** These instructions may be loaded into memory **406** for execution by processor unit **404.** The processes of the different embodiments may be performed by processor unit **404** using computer-implemented instructions, which may be located in a memory, such as memory **406.**

These instructions are referred to as program code, computer usable program code, or computer readable program code that may be read and executed by a processor in processor unit **404.** The program code in the different embodiments may be embodied on different physical or tangible computer readable media, such as memory 406 or persistent storage **408.**

Program code **418** is located in a functional form on computer readable media **420** that is selectively removable and may be loaded onto or transferred to data processing system **400** for execution by processor unit **404.** Program code **418** and computer readable media **420** form computer program product **422** in these examples. In one example, computer readable media **420** may be in a tangible form such as, for example, an optical or magnetic disk that is inserted or placed into a drive or other device that is part of persistent storage **408** for transfer onto a storage device, such as a hard drive that is part of persistent storage **408.** In a tangible form, computer readable media **420** also may take the form of a persistent storage, such as a hard drive, a thumb drive, or a flash memory that is connected to data processing system **400.** The tangible form of computer readable media **420** is also referred to as computer recordable storage media. In some instances, computer readable media **420** may not be removable.

Alternatively, program code **418** may be transferred to data processing system **400** from computer readable media **420** through a communications link to communications unit **410** and/or through a connection to input/output unit **412.** The communications link and/or the connection may be physical or wireless in the illustrative examples. The computer readable media also may take the form of non-tangible media, such as communications links or wireless transmissions containing the program code.

In some illustrative embodiments, program code **418** may be downloaded over a network to persistent storage **408** from another device or data processing system for use within data processing system **400.** For instance, program code stored in a computer readable storage medium in a server data processing system may be downloaded over a network from the server to data processing system **400.** The data processing system providing program code **418** may be a server computer, a client computer, or some other device capable of storing and transmitting program code **418.**

The different components illustrated for data processing system **400** are not meant to provide architectural limitations to the manner in which different embodiments may be implemented. The different illustrative embodiments may be implemented in a data processing system including components in addition to or in place of those illustrated for data processing system **400.** Other components shown in **Figure 4** can be varied from the illustrative examples shown. The different embodiments may be implemented using any hardware device or system capable of executing program code. As one example, the data processing system may include organic components integrated with inorganic components and/or may be comprised entirely of organic components excluding a human being. For example, a storage device may be comprised of an organic semiconductor.

As another example, a storage device in data processing system **400** is any hardware apparatus that may store data. Memory **406,** persistent storage **408,** and computer readable media **420** are examples of storage devices in a tangible form.

In another example, a bus system may be used to implement communications fabric **402** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **406** or a cache such as found in an interface and memory controller hub that may be present in communications fabric **402.**

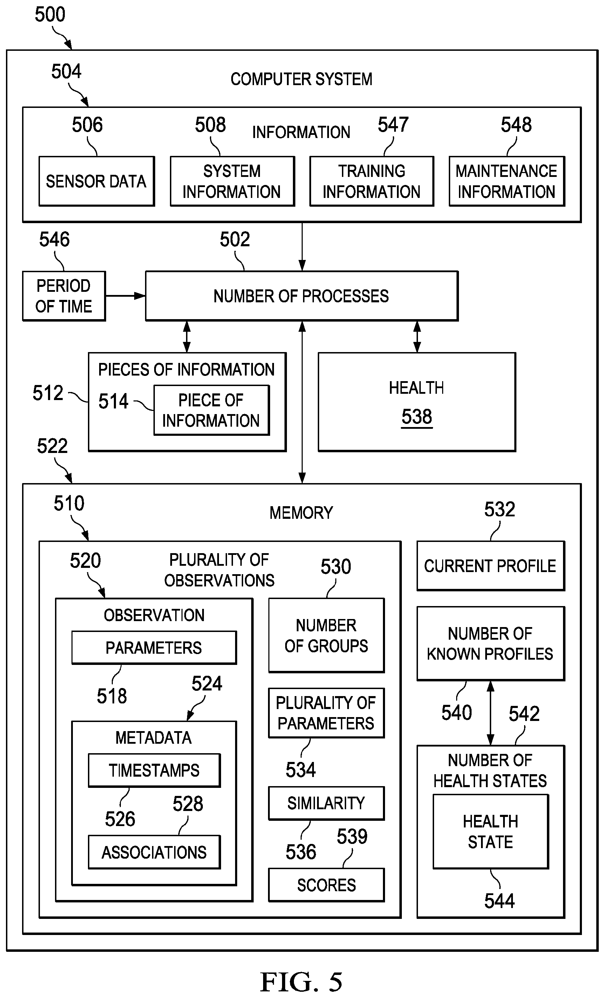

Turning now to **Figure 5****,** an illustration of a flow of information in a computer system for a health monitoring system is depicted in accordance with an advantageous embodiment. In this illustrative example, computer system **500** may include one or more computers that may be implemented using data processing system **400** in **Figure 4****.**

In this illustrative example, number of processes **502** runs on computer system **500.** Number of processes **502** receives information **504** in the form of at least one of sensor data **506** and system information **508.** Number of processes **502** forms plurality of observations **510** using at least one of sensor data **506** and system information **508.**

For example, number of processes **502** identifies pieces of information **512** within information **504.** Piece of information **514** within pieces of information **512** may be identified based on when piece of information **514** was received. All information within piece of information **514** may be placed into parameters **518** for observation **520.** Parameters **518** are variables filled with information from piece of information **514.** Each parameter in parameters **518** may be a variable in which a value or text may be placed.

When parameters **518** are filled using piece of information **514,** observation **520** in plurality of observations **510** is formed. Observation **520** is stored in plurality of observations **510** in memory **522.**

Further, metadata **524** also may be included in observation **520.** Metadata **524** may be, for example, without limitation, timestamps **526.** In these illustrative examples, metadata **524** also may include associations **528.** Associations **528** may be used to create associations between plurality of observations **510.** Number of groups **530** is formed by plurality of observations **510** that are associated to each other based on similarities between plurality of observations **510.** In these illustrative examples, when plurality of observations **510** are grouped into number of groups **530,** current profile **532** is formed.

In these illustrative examples, plurality of observations **510** may be grouped into number of groups **530** based on a similarity of observations within plurality of observations **510** with each other. For example, parameters **518** in observation **520** may be compared with plurality of parameters **534** for other observations in plurality of observations **510.** Based on this comparison, similarity **536** may be identified between observation **520** and other observations within plurality of observations **510.** Scores **539** may be assigned to the other observations in plurality of observations **510.**

Thereafter, scores **539** may be used to determine whether an association should be formed between observation **520** and each of the other observations in plurality of observations **510.** This process may be performed for all of the other observations in plurality of observations **510.**

Current profile **532** may be used to identify health **538** of a platform. For example, current profile **532** may be compared to number of known profiles **540.** In these illustrative examples, each profile within number of known profiles **540** corresponds to number of health states **542** for the platform. A match with a profile in number of known profiles **540** or a closest match to a profile within number of known profiles **540** may be used to identify health state **544** within number of health states **542** for the platform. Health state **544** indicates health **538** of the platform.

Additionally, number of processes **502** may be run to create number of known profiles **540.** For example, information **504** received during period of time **546** may be training information **547** for the platform during a particular health state. Number of processes **502** may be run for other periods of time to identify other known profiles.

Further, number of processes **502** may be run using a history of information **504** instead of during the collection of information **504** to create number of known profiles **540.** Training information **547** may be identified using timestamps **526.** Training information **547** is comprised of information previously collected. In some examples, timestamps **526** may be included in training information **547.**

In addition, maintenance information **548** also may be used in creating number of known profiles **540.** In some advantageous embodiments, maintenance information **548** may be a portion of training information **547.** Maintenance information **548** may include information about a number of maintenance events. For example, maintenance information **548** may indicate when new components are added, when repairs are made, when replacements are made, and/or other suitable information. This information may be used to identify an improperly installed part or an incorrect part.

Further, in some advantageous embodiments, computer system **500** selects a portion of plurality of observations **510** based on maintenance information **548.** Computer system **500** selects the portion using the number of maintenance events and/or metadata. The metadata may comprise at least one of a timestamp for a piece of information and an identifier of a source of the piece of information. Current profile **532** may be created from the portion of plurality of observations **510** in these examples.

As a specific example, plurality of observations **510** may be formed based on information **504** for a landing system of an aircraft. Maintenance information **548** may indicate that a part of the landing system was replaced during the formation of plurality of observations **510.** Maintenance information **548** and metadata **524** may be used to select the portion of plurality of observations **510** that was formed after the replacement of the part. The selected portion may then be used to create current profile **532.**

The illustration of computer system **500** in **Figure 5** is not meant to imply physical or architectural limitations to the manner in which different advantageous embodiments may be implemented. For example, in some advantageous embodiments, number of known profiles **540** may be located in a remote location from computer system **500.** As another example, one process in number of processes **502** may collect information **504** to form current profile **532.** Another process may form associations **528** between plurality of observations **510** to form current profile **532.**

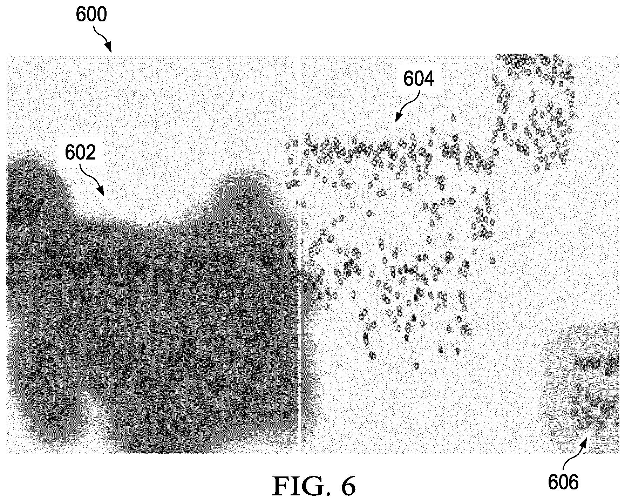

With reference now to **Figure 6****,** an illustration of a plurality of observations is depicted in accordance with an advantageous embodiment. Plurality of observations **600** is an example of one implementation of plurality of observations **510** in **Figure 5****.** Plurality of observations **600** comprise parameters for monitoring the health of a platform.

In this illustrative example, plurality of observations **600** may comprise observations that are formed based on information, such as information **504** in **Figure 5****.** As depicted, plurality of observations **600** are grouped into group **602,** group **604,** and group **606.** Each of these groups comprises observations within plurality of observations **600** having a similarity.

Further, each of groups **602, 604,** and **606** correspond to a health state. In this illustrative example, observations in group **602** correspond to a "degraded" health state. Observations in group **604** correspond to a "needs repair" health state. In some examples, the "needs repair" health state also may be referred to as a "faulty" health state. Observations in group **606** correspond to a "repaired" health state. In some examples, a "repaired" health state also may be referred to as a "healthy" state.

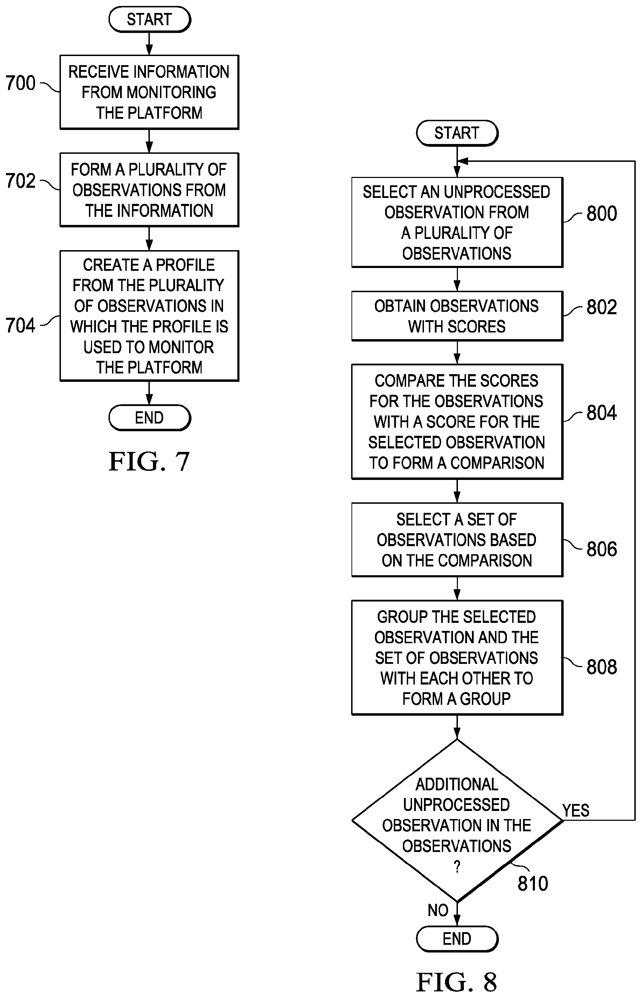

With reference now to **Figure 7****,** an illustration of a flowchart of a process for monitoring a platform is depicted in accordance with an advantageous embodiment. The process in **Figure 7** may be implemented in health monitoring system **306** in health monitoring environment **300** in **Figure 3****.**

The process begins by receiving information from monitoring the platform (operation **700).** The monitoring of the platform may be performed by receiving information from a sensor network associated with the platform. This monitoring also may occur by receiving information from a number of systems on the platform.

The process then forms a plurality of observations from the information (operation 702). These observations may be formed by identifying pieces of information in the information received. An observation is created from each piece of information to form the plurality of observations. In these illustrative examples, a piece of information may be identified as a piece of information at a particular time or within a particular period of time. The different values or text in the piece of information may be placed into parameters for an observation.

The process then creates a profile from the plurality of observations in which the profile is used to monitor the platform (operation **704),** with the process terminating thereafter. The creation of the profile may be performed in a number of different ways. For example, the formation of the profile may occur by placing the plurality of observations in a memory. In other advantageous embodiments, the profile may be created when groupings of the plurality of observations are made.

The profile created in **Figure 7** may be a current profile when the information is collected during operation of the platform and analyzed to identify a health state for the profile. This health state may be used to indicate the health of the platform. In other advantageous embodiments, the profile may be a known profile that is created for use in monitoring a platform. When the profile is a known profile, the information also may include maintenance information.

With reference now to **Figure 8****,** an illustration of a flowchart for creating a profile is depicted in accordance with an illustrative embodiment. The process illustrated in **Figure 8** may be implemented in number of processes **326** in **Figure 3** or number of processes **502** in **Figure 5****.**

The process begins by selecting an unprocessed observation from a plurality of observations (operation **800).** The process then obtains observations with scores (operation **802).** In operation **802,** these observations are observations other than the selected observation. In this illustrative example, these scores identify a similarity of the observations to the selected observation.

The process then compares the scores for the observations with a score for the selected observation to form a comparison (operation **804).** A set of observations is selected based on the comparison (operation **806).** In these illustrative examples, the set of observations may contain no observations, one observation, or any other number of observations from the observations from which the comparison was made. Next, the selected observation and the set of observations are grouped with each other to form a group (operation **808).**

A determination is made as to whether an additional unprocessed observation is present in the observations (operation **810).** If an additional unprocessed observation is present, the process returns to operation **800** as described above. Otherwise, the process terminates once processing of the observations is completed and the profile has been formed.

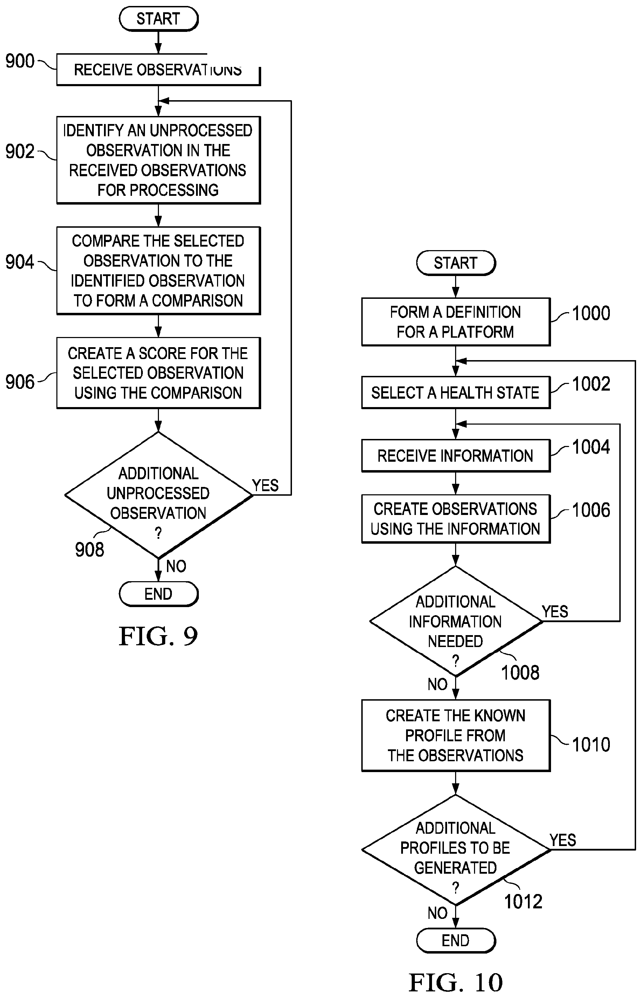

With reference now to **Figure 9****,** an illustration of a flowchart for creating scores for observations is depicted in accordance with an advantageous embodiment. The process illustrated in **Figure 9** is an example of one implementation of operation **802** in **Figure 8****.**

The process begins by receiving observations (operation **900).** These observations are observations for which scores are desired with respect to a selected observation from which a similarity score is desired. The selected observation may be an unprocessed observation selected in operation **800** in **Figure 8****.** The process identifies an unprocessed observation in the received observations for processing (operation **902).** The selected observation is compared to the identified observation to form a comparison (operation **904).**

A score is created for the selected observation using the comparison (operation **906).** A determination is made as to whether an additional unprocessed observation is present in the received observations (operation **908).** If an additional unprocessed observation is present, the process returns to operation **902.** Otherwise, the process terminates.

Turning now to **Figure 10****,** an illustration of a flowchart of a process for creating known profiles is depicted in accordance with an advantageous embodiment. The process illustrated in **Figure 10** may be implemented in health monitoring environment **300** in **Figure 3****.** Further, the process may be implemented within number of processes **326** in **Figure 3****.**

The process begins by forming a definition for a platform (operation **1000).** This platform may be an entire vehicle, a subsystem, a component, or some other suitable portion of a platform. The definition for the platform includes parameters for observations.

The process then selects a health state (operation **1002).** This health state is for the known profile that is to be generated. The process then receives information (operation **1004).** In these examples, operation **1004** may be performed during operation of the platform. In some advantageous embodiments, the information may be a history of information previously collected for the platform. The process then creates observations using the information (operation **1006).**

A determination is then made as to whether additional information is needed (operation **1008).** If additional information is needed, the process returns to operation **1004.** Otherwise, the process creates the known profile from the observations (operation **1010).** A determination is then made as to whether additional profiles are to be generated (operation **1012).** If additional profiles are to be generated, the process returns to operation **1002.** Otherwise, the process terminates.

The flowcharts and block diagrams in the different depicted embodiments illustrate the architecture, functionality, and operation of some possible implementations of apparatus, methods, and computer program products. In this regard, each block in the flowcharts or block diagrams may represent a module, segment, or portion of computer-usable or readable program code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

For example, in some advantageous embodiments, the selection of a health state in operation **1002** may be performed after the creation of the known profile in operation **1010.** With this type of process, the known profile may be associated with a health state after the known profile is created. Further, the selection of the health state for the known profile may be based on training information and/or maintenance information.

Thus, the different advantageous embodiments provide a method and apparatus for monitoring a platform. In one advantageous embodiment, an apparatus comprises a computer system and a sensor network. The sensor network is associated with a platform. The computer system is connected to the sensor network and is configured to receive information from the sensor network. The computer system is configured to form observations from the information for a current profile. The computer system compares the current profile with a number of known profiles to identify a health state of the platform.

The different advantageous embodiments can take the form of an entirely hardware embodiment, an entirely software embodiment, or an embodiment containing both hardware and software elements. Some embodiments are implemented in software, which includes, but is not limited to, forms such as, for example, firmware, resident software, and microcode.

Furthermore, the different embodiments can take the form of a computer program product accessible from a computer-usable or computer-readable medium providing program code for use by or in connection with a computer or any device or system that executes instructions. For the purposes of this disclosure, a computer-usable or computer-readable medium can generally be any tangible apparatus that can contain, store, communicate, propagate, or transport the program for use by or in connection with the instruction execution system, apparatus, or device.

The computer-usable or computer-readable medium can be, for example, without limitation, an electronic, magnetic, optical, electromagnetic, infrared, or semiconductor system, or a propagation medium. Nonlimiting examples of a computer-readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W), and DVD.

Further, a computer-usable or computer-readable medium may contain or store a computer readable or usable program code such that when the computer readable or usable program code is executed on a computer, the execution of this computer-readable or usable program code causes the computer to transmit another computer-readable or usable program code over a communications link. This communications link may use a medium that is, for example, without limitation, physical or wireless.

A data processing system suitable for storing and/or executing computer-readable or computer-usable program code will include one or more processors coupled directly or indirectly to memory elements through a communications fabric, such as a system bus. The memory elements may include local memory employed during actual execution of the program code, bulk storage, and cache memories, which provide temporary storage of at least some computer-readable or computer-usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems, remote printers, or storage devices through intervening private or public networks. Nonlimiting examples are modems and network adapters and are just a few of the currently available types of communications adapters.

## Claims

1. An apparatus comprising:
a sensor network associated with a platform in which the sensor network is configured to monitor health of the platform;
a number of systems associated with the platform in which the number of systems and the sensor network are configured to provide information (504) about the platform; and
a computer system (500) connected to the sensor network and the number of systems in which the computer system (500) is configured to:
receive the information (504) about the platform comprising at least one of sensor data (506) and system information (508);
process the information (504) about the platform to form a plurality of observations (510) using at least one of sensor data (506) and system information (508);
select, using maintenance information (548), a portion of the plurality of observations (510);
create a current profile (532) from the selected portion of the plurality of observations (510), in which the current profile (532) is used to identify a health state (544) for the platform;
compare the current profile (532) to a number of known profiles (540) to identify the health state (544) for the platform,
wherein a history of information (504) and maintenance information (548) are used in creating the number of known profiles (540).

2. The apparatus of claim 1, wherein the computer system (500) is in a location remote to the platform and is connected to the sensor network and the number of systems through another computer system on the platform.

3. The apparatus of claim 1 further comprising:
the number of systems, wherein the number of systems comprises at least one of a navigation system, avionics for an aircraft, an environmental control system, a surface control system, a flight control system, a drive system, a landing system, and a propulsion system.

4. The apparatus of claim 1, wherein the maintenance information (548) comprises a number of maintenance events performed for the platform, wherein in creating the current profile (532), the computer system (500) is further configured to select the portion of the plurality of observations (510) based on the number of maintenance events performed for the platform in order to create the current profile (532).

5. The apparatus of claim 4, wherein the computer system is further configured to associate metadata with the information (504) about the platform.

6. The apparatus of claim 5, wherein the computer system (500) is further configured to select the portion of the plurality of observations (510) using the number of maintenance events and the metadata.

7. The apparatus of claim 5, wherein the metadata is comprised of at least one of a timestamp (526) for a piece of information and an identifier of a source of the piece of information.

8. The apparatus of any preceding claim, wherein the health state is selected from a number of health states for the number of known profiles, and wherein the number of health states comprise one or more of: new, operational, healthy, degraded, needs repair, and/or repaired.

9. The apparatus of any preceding claim, wherein the platform comprises one or more of: a vehicle, an aircraft, a portion of a vehicle, a propulsion system, and/or a shaft.

10. A method for monitoring a platform, the method comprising:
receiving information (504) about the platform from monitoring the platform comprising at least one of sensor data (506) and system information (508), wherein the information (504) about the platform is received from a sensor network and a number of systems associated with the platform;
forming a plurality of observations (510) using the at least one of sensor data (506) and system information (508);
selecting, using maintenance information (548), a portion of the plurality of observations (510); and
creating a current profile (532) from the selected portion of the plurality of observations (510), in which the current profile (532) is used to identify a health state (544) for the platform;
comparing the current profile (532) to a number of known profiles (540) to identify a health state (544) for the platform,
wherein a history of information (504) and maintenance information (548) are used in creating the number of known profiles (540).

11. The method of claim 10, wherein the step of forming the plurality of observations (510) from the information (504) about the platform comprises:
identifying a number of pieces of information (512) in the information (504) about the platform; and
creating an observation from each piece of information (514) in the number of pieces of information (512) to form the plurality of observations (510).

12. The method of claim 10, wherein the profile is selected from one of a current profile (532) and a known profile and wherein the step of creating the profile comprises:
grouping observations (520) in the plurality of observations (510) to form a number of groups based on similarities between the observations (520) in the plurality of observations (510).

13. The method of claim 10 further comprising:
associating metadata with the information (504) about the platform, wherein the metadata comprises at least one of a timestamp (526) for a piece of information and an identifier of a source of the piece of information.

14. The method of any of claims 10-13, wherein the health state is selected from a number of health states for the number of known profiles, and wherein the number of health states comprise one or more of: new, operational, healthy, degraded, needs repair, and/or repaired.

15. The method of any of claims 10-14, wherein the platform comprises one or more of: a vehicle, an aircraft, a portion of a vehicle, a propulsion system, and/or a shaft.

## Patentansprüche

1. Vorrichtung, umfassend:
ein Sensornetzwerk, das einer Plattform zugeordnet ist, wobei das Sensornetzwerk ausgelegt ist, einen Zustand der Plattform zu überwachen;
eine Anzahl von Systemen, die der Plattform zugeordnet sind, wobei die Anzahl von Systemen und das Sensornetzwerk ausgelegt sind, Informationen (504) über die Plattform bereitzustellen; und
ein Computersystem (500), das mit dem Sensornetzwerk und der Anzahl von Systemen verbunden ist, wobei das Computersystem (500) ausgelegt ist:
die Informationen (504) über die Plattform zu empfangen, umfassend mindestens eines von Sensordaten (506) und Systeminformationen (508);
die Informationen (504) über die Plattform zu verarbeiten, um unter Verwendung mindestens eines von Sensordaten (506) und Systeminformationen (508) eine Mehrzahl von Beobachtungen (510) zu bilden;
unter Verwendung von Wartungsinformationen (548) einen Teil der Mehrzahl von Beobachtungen (510) auszuwählen;
aus dem ausgewählten Teil der Mehrzahl von Beobachtungen (510) ein aktuelles Profil (532) zu erstellen, wobei das aktuelle Profil (532) verwendet wird, um einen Gesundheitszustand (544) für die Plattform zu identifizieren;
das aktuelle Profil (532) mit einer Anzahl von bekannten Profilen (540) zu vergleichen, um den Gesundheitszustand (544) für die Plattform zu identifizieren,
wobei ein Verlauf von Informationen (504) und Wartungsinformationen (548) beim Erstellen der Anzahl von bekannten Profilen (540) verwendet werden.

2. Vorrichtung nach Anspruch 1, wobei sich das Computersystem (500) an einem von der Plattform entfernten Ort befindet und über ein anderes Computersystem auf der Plattform mit dem Sensornetzwerk und der Anzahl von Systemen verbunden ist.

3. Vorrichtung nach Anspruch 1, ferner umfassend:
die Anzahl von Systemen, wobei die Anzahl von Systemen mindestens eines von einem Navigationssystem, einer Avionik für ein Luftfahrzeug, einem Umgebungssteuersystem, einem Oberflächensteuersystem, einem Flugsteuersystem, einem Antriebssystem, einem Landesystem und einem Antriebssystem umfasst.

4. Vorrichtung nach Anspruch 1, wobei die Wartungsinformationen (548) eine Anzahl von für die Plattform durchgeführten Wartungsereignissen umfassen, wobei das Computersystem (500) beim Erstellen des aktuellen Profils (532) ferner ausgelegt ist, den Teil der Mehrzahl von Beobachtungen (510) basierend auf der Anzahl von für die Plattform durchgeführten Wartungsereignissen auszuwählen, um das aktuelle Profil (532) zu erstellen.

5. Vorrichtung nach Anspruch 4, wobei das Computersystem ferner ausgelegt ist, den Informationen (504) über die Plattform Metadaten zuzuordnen.

6. Vorrichtung nach Anspruch 5, wobei das Computersystem (500) ferner ausgelegt ist, den Teil der Mehrzahl von Beobachtungen (510) unter Verwendung der Anzahl von Wartungsereignissen und der Metadaten auszuwählen.

7. Vorrichtung nach Anspruch 5, wobei die Metadaten mindestens eines von einem Zeitstempel (526) für eine Information und eine Kennung einer Quelle der Information umfassen.

8. Vorrichtung nach einem der vorhergehenden Ansprüche, wobei der Gesundheitszustand aus einer Anzahl von Gesundheitszuständen für die Anzahl von bekannten Profilen ausgewählt wird, und wobei die Anzahl von Gesundheitszuständen eines oder mehrere von Folgendem umfasst: neu, betriebsbereit, gesund, verschlechtert, reparaturbedürftig und/oder repariert.

9. Vorrichtung nach einem der vorhergehenden Ansprüche, wobei die Plattform eines oder mehrere von Folgendem umfasst: ein Fahrzeug, ein Luftfahrzeug, einen Teil eines Fahrzeugs, ein Antriebssystem und/oder eine Welle.

10. Verfahren zum Überwachen einer Plattform, wobei das Verfahren umfasst:
Empfangen von Informationen (504) über die Plattform aus einer Überwachung der Plattform, umfassend mindestens eines von Sensordaten (506) und Systeminformationen (508), wobei die Informationen (504) über die Plattform von einem Sensornetzwerk und einer Anzahl von der Plattform zugeordneten Systemen empfangen werden;
Bilden mehrerer Beobachtungen (510) unter Verwendung von Sensordaten (506) und/oder Systeminformationen (508);
Auswählen eines Teils der Mehrzahl von Beobachtungen (510) unter Verwendung von Wartungsinformationen (548); und
Erstellen eines aktuellen Profils (532) aus dem ausgewählten Teil der Mehrzahl von Beobachtungen (510), wobei das aktuelle Profil (532) verwendet wird, um einen Gesundheitszustand (544) für die Plattform zu identifizieren;
Vergleichen des aktuellen Profils (532) mit einer Anzahl bekannter Profile (540), um einen Gesundheitszustand (544) für die Plattform zu identifizieren,
wobei ein Verlauf von Informationen (504) und Wartungsinformationen (548) beim Erstellen der Anzahl von bekannten Profilen (540) verwendet werden.

11. Verfahren nach Anspruch 10, wobei der Schritt des Bildens der Mehrzahl von Beobachtungen (510) aus den Informationen (504) über die Plattform umfasst:
Identifizieren einer Anzahl von Informationen (512) in den Informationen (504) über die Plattform; und
Erstellen einer Beobachtung aus jedem Informationselement (514) in der Anzahl von Informationselementen (512), um die Mehrzahl von Beobachtungen (510) zu bilden.

12. Verfahren nach Anspruch 10, wobei das Profil aus einem von einem aktuellen Profil (532) und einem bekannten Profil ausgewählt wird und wobei der Schritt des Erstellens des Profils umfasst:
Gruppieren von Beobachtungen (520) in der Mehrzahl von Beobachtungen (510), um eine Anzahl von Gruppen basierend auf Ähnlichkeiten zwischen den Beobachtungen (520) in der Mehrzahl von Beobachtungen (510) zu bilden.

13. Verfahren nach Anspruch 10, ferner umfassend:
Zuordnen von Metadaten zu den Informationen (504) über die Plattform, wobei die Metadaten mindestens eines von einem Zeitstempel (526) für eine Information und einer Kennung einer Quelle der Information umfassen.

14. Verfahren nach einem der Ansprüche 10-13, wobei der Gesundheitszustand aus einer Anzahl von Gesundheitszuständen für die Anzahl von bekannten Profilen ausgewählt wird, und wobei die Anzahl von Gesundheitszuständen eines oder mehrere von Folgendem umfasst: neu, betriebsbereit, gesund, verschlechtert, reparaturbedürftig und/oder repariert.

15. Verfahren nach einem der Ansprüche 10-14, wobei die Plattform eines oder mehrere von Folgendem umfasst: ein Fahrzeug, ein Luftfahrzeug, einen Teil eines Fahrzeugs, ein Antriebssystem und/oder eine Welle.

## Revendications

1. Appareil, comprenant :
un réseau de capteurs, associé à une plate-forme, dans lequel le réseau de capteurs est configuré pour surveiller la santé de la plate-forme ;
un nombre de systèmes, associés à la plate-forme, dans lequel le nombre de systèmes et le réseau de capteurs sont configurés pour fournir des informations (504) concernant la plate-forme ; et
un système d'ordinateur (500) connecté au réseau de capteurs et au nombre de systèmes, dans lequel le système d'ordinateur (500) est configuré pour :
recevoir les informations (504) concernant la plate-forme comprenant au moins un type de paramètres parmi des données de capteur (506) et des informations de système (508) ;
traiter les informations (504) concernant la plate-forme pour former une pluralité d'observations (510) en utilisant au moins un type de paramètres parmi des données de capteur (506) et des informations de système (508) ;
sélectionner, en utilisant des informations de maintenance (548), une partie de la pluralité d'observations (510) ;
créer un profil actuel (532) à partir de la partie sélectionnée de la pluralité d'observations (510), dans lequel le profil actuel (532) est utilisé pour identifier un état de santé (544) pour la plate-forme ;
comparer le profil actuel (532) à un nombre de profils connus (540) pour identifier l'état de santé (544) pour la plate-forme,
dans lequel un historique d'informations (504) et d'informations de maintenance (548) est utilisé pour créer le nombre de profils connus (540).

2. Appareil de la revendication 1, dans lequel le système d'ordinateur (500) est dans un emplacement éloigné de la plate-forme et est connecté au réseau de capteurs et au nombre de systèmes par le biais d'un autre système d'ordinateur sur la plate-forme.

3. Appareil de la revendication 1, comprenant en outre :
le nombre de systèmes, dans lequel le nombre de systèmes comprend au moins un dispositif parmi un système de navigation, des équipements avioniques pour un aéronef, un système de contrôle environnemental, un système de contrôle de surface, un système de contrôle de vol, un système de conduite, un système d'atterrissage, et un système de propulsion.

4. Appareil de la revendication 1, dans lequel les informations de maintenance (548) comprennent un nombre d'événements de maintenance réalisés pour la plate-forme, dans lequel, dans la création du profil actuel (532), le système d'ordinateur (500) est en outre configuré pour sélectionner la partie de la pluralité d'observations (510) sur la base du nombre d'événements de maintenance réalisés pour la plate-forme afin de créer le profil actuel (532).

5. Appareil de la revendication 4, dans lequel le système d'ordinateur est en outre configuré pour associer des métadonnées aux informations (504) concernant la plate-forme.

6. Appareil de la revendication 5, dans lequel le système d'ordinateur (500) est en outre configuré pour sélectionner la partie de la pluralité d'observations (510) en utilisant le nombre d'événements de maintenance et les métadonnées.

7. Appareil de la revendication 5, dans lequel les métadonnées sont composées d'au moins un composant parmi une estampille temporelle (526) pour un élément d'informations et un identifiant d'une source de l'élément d'informations.

8. Appareil d'une quelconque revendication précédente, dans lequel l'état de santé est sélectionné parmi un nombre d'états de santé pour le nombre de profils connus, et dans lequel le nombre d'états de santé comprennent un ou plusieurs états parmi : nouveau, opérationnel, en bonne santé, dégradé, ayant besoin de réparation, et/ou réparé.

9. Appareil d'une quelconque revendication précédente, dans lequel la plate-forme comprend une ou plusieurs unités parmi : un véhicule, un aéronef, une partie d'un véhicule, un système de propulsion, et/ou un arbre.

10. Procédé pour surveiller une plate-forme, le procédé comprenant :
la réception d'informations (504) concernant la plate-forme en provenance d'une surveillance de la plate-forme comprenant au moins un type de paramètres parmi des données de capteur (506) et des informations de système (508), dans lequel les informations (504) concernant la plate-forme sont reçues en provenance d'un réseau de capteurs et d'un nombre de systèmes associés à la plate-forme ;
la formation d'une pluralité d'observations (510) en utilisant l'au moins un type de paramètres parmi des données de capteur (506) et des informations de système (508) ;
la sélection, en utilisant des informations de maintenance (548), d'une partie de la pluralité d'observations (510) ; et
la création d'un profil actuel (532) à partir de la partie sélectionnée de la pluralité d'observations (510), dans lequel le profil actuel (532) est utilisé pour identifier un état de santé (544) pour la plate-forme ;
la comparaison du profil actuel (532) à un nombre de profils connus (540) pour identifier un état de santé (544) pour la plate-forme,
dans lequel un historique d'informations (504) et d'informations de maintenance (548) est utilisé pour créer le nombre de profils connus (540).

11. Procédé de la revendication 10, dans lequel l'étape de la formation de la pluralité d'observations (510) à partir des informations (504) concernant la plate-forme comprend :
l'identification d'un nombre d'éléments d'informations (512) dans les informations (504) concernant la plate-forme ; et
la création d'une observation à partir de chaque élément d'informations (514) dans le nombre d'éléments d'informations (512) pour former la pluralité d'observations (510).

12. Procédé de la revendication 10, dans lequel le profil est sélectionné parmi un profil parmi un profil actuel (532) et un profil connu, et dans lequel l'étape de la création du profil comprend :
le groupement d'observations (520) dans la pluralité d'observations (510) pour former un nombre de groupes sur la base de similarités entre les observations (520) dans la pluralité d'observations (510).

13. Procédé de la revendication 10, comprenant en outre :
l'association de métadonnées aux informations (504) concernant la plate-forme, dans lequel les métadonnées comprennent au moins un composant parmi une estampille temporelle (526) pour un élément d'informations et un identifiant d'une source de l'élément d'informations.

14. Procédé de quelconques des revendications 10 à 13, dans lequel l'état de santé est sélectionné parmi un nombre d'états de santé pour le nombre de profils connus, et dans lequel le nombre d'états de santé comprennent un ou plusieurs états parmi : nouveau, opérationnel, en bonne santé, dégradé, ayant besoin de réparation, et/ou réparé.

15. Procédé de quelconques des revendications 10 à 14, dans lequel la plate-forme comprend une ou plusieurs unités parmi : un véhicule, un aéronef, une partie d'un véhicule, un système de propulsion, et/ou un arbre.
